# EUROPEAN PATENT SPECIFICATION

(11) **EP 0 904 638 B1**
(45) Date of publication and mention of the grant of the patent: **18.10.2006**
(21) Application number: 97915734.4
(22) Date of filing: 29.03.1997
(51) Int. Cl.: H04B 7/26

(54) **SYSTEM AND METHOD FOR PROVIDING USEFUL INFORMATION FOR A MOVING OBJECT**
VORRICHTUNG UND VEFAHREN ZUR NÜTZLICHEN INFORMATIONSBEREITSTELLUNG FÜR EIN BEWEGENDES OBJEKT
SYSTEME ET PROCEDE DE FOURNITURE D'INFORMATIONS UTILES A UN OBJET MOBILE

(30) Priority: 07.06.1996 KR 2038396; 25.03.1997 KR 1023397
(43) Date of publication of application: 31.03.1999
(73) Proprietor: SK Telecom Co., Ltd., Jung-ku, Seoul 100-095 (KR)
(72) Inventor: KIM, Shin, Bae, Kangnam-ku Seoul 135-110 (KR); MIN, Gun, Dong, Incheon 405-234 (KR); SONG, Yun, Sup, Seoul 157-010 (KR); KI, Jung, Kook, Seoul 130-080 (KR); KIM, Young, Kwan, Jungrang-ku Seoul 131-232 (KR); BANG, Ji, Won, Seoul 151-057 (KR)
(74) Representative: BOVARD AG
(86) International application number: PCT/KR1997/000052
(87) International publication number: WO 1997/047095

(56) References cited:
- WO-A-96/11436
- JP-A- 6 318 899
- JP-A- 6 326 648
- US-A- 4 812 843
- US-A- 5 218 629
- US-B1- 6 741 161

## Description

### Technical Field

The present invention relates to a multimedia data system and the method for providing the public with useful information, such as news, the weather forecast, traffic information, culture news, information for stock market, sports news, and a campaign for the public good, through a radio paging network, and for broadcasting sopping-places and transit areas and giving various kinds of information through both moving picture and still picture system.

### Background Art

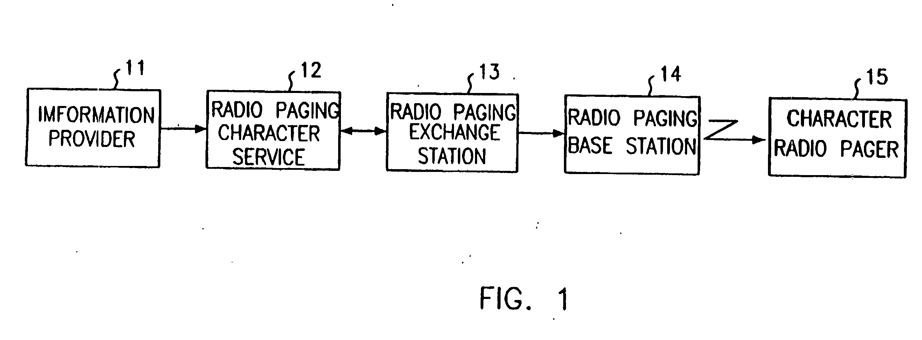

Fig. 1 is a block diagram illustrating a conventional character radio paging network, in which the reference numeral 11 denotes an information provider, 12 a radio paging character server, 13 a radio paging exchange station, 14 a radio paging base station, and 15 a character radio pager.

As shown in FIG. 1, the conventional character radio paging network includes: the information provider 11 which furnishes the public with useful information, such as news, weather forecast, traffic information, culture news, the information for stock market, sports news and a campaign for the public good; the radio paging character server 12 which receives information from the information provider 11 and then classifies them according to subscribers; the radio paging exchange station 13 which converts the classified information data from the radio paging character server 12 into transmission data which the character radio pager 15 can receive; the radio paging base station 14 which broadcasts the data inputted from the radio paging exchange station 13; and a character radio pager 15 which provides the public with information data transmitted from the radio paging base station 14.

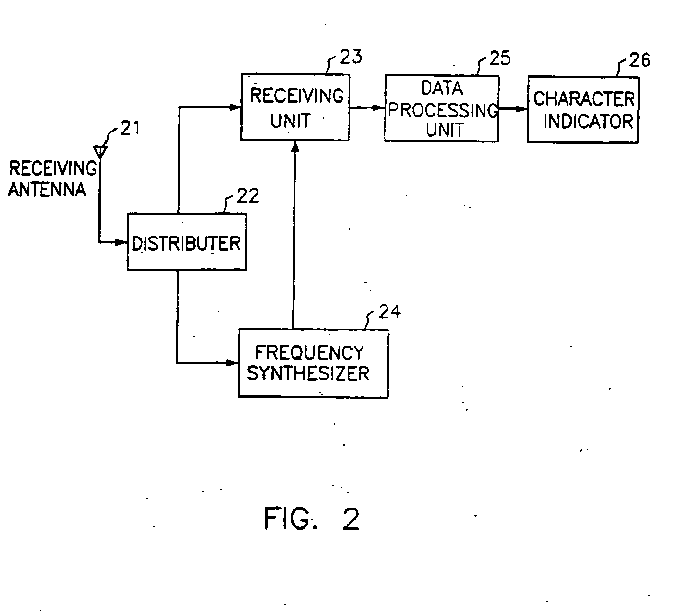

Fig. 2 is a block diagram illustrating a conventional character radio pager in FIG. 1, in which there are shown a receiving antenna 21, a distributer 22, a receiving unit 23, a frequency synthesizer 24, a data processing unit 25, and a character indicator 26.

In the distributer 22, the character radio frequency received from the receiving antenna 21 is distributed to the receiving unit 23 and the frequency synthesizer 24. The frequency synthesizer 24 outputs a control signal for the receiving unit 23 to select a fixed channel. The receiving unit 23 demodulates the signal from the distributer 22, in response to the control signal of the frequency synthesizer 24. The data processing unit 25 outputs character-based information to user from the character indicator 25 by processing the output from the receiving unit 23.

In accordance with the illustrated conventional character-based radio paging network, there is a difficulty in securing a majority of customers on the view of network operator, thereby causing the profit to be diminished, and there is a hindrance in effectively using the limited frequency resources.

Therefore, it is necessary to create a new service for variously using the character-based radio paging network. Meanwhile, in the case that the driver directly fabricates an announcement about bus stop database through the operation by his hand, there is a problem making him be inattentive while driving, thereby threatening the passenger's safety.

The document US-A-4,812,843 discloses a traffic information system for advising travelers of conditions along vehicular routings in metropolitan areas, however limited to access by subscribers of a telephone communication system or, optionally, to access by modem of personal computers or pagers. The information on the traffic conditions is only available upon dialing of a special telephone number by a subscriber and is not adapted nor intended to display information to the public.

The device according to the publication JP-6,326'648 that is able to inform a private driver about a destination, or a traveling direction, exclusively works by audible information. No use for display of pictures or use for the public is disclosed.

Japanese published patent application No. JP-6,318,899 discloses a pocket pager.

The document WO 96/1 1436 discloses a system capable of reproducing advertisement information to travelers at various times, after having been transmitted to the device only once. All data to be presented to the users are transmitted to the device via radio broadcasting:

The device according to the US patent US 5,218,629 receives and displays information to the passengers of public transportation vehicles, using transmission over a cellular phone network.

### Disclosure of Invention

An object of the invention is to provide a multimedia data service system and a method for providing the public with useful information such as news, the weather forecast, traffic information, cultural information, stock market news, sports news, public service information, etc. through the radio paging network by establishing a multimedia terminal system. Public transport service can be surely improved thereby by providing both moving and still pictures. This invention can also be employed to keep a driver attentive while driving, thereby contributing to passenger convenience and comfort. Also, at the same time, passenger safety is improved by broadcasting the bus stop announcements using the received information from a GPS receiver.

The object of the invention is achieved through a new and useful system for providing character-based information for a moving object, the system including a receiving unit, a data processing unit, and an indicator unit. Such a system comprises the features defined in the characterizing clause of appended claim 1.

The method for providing useful information including character-based information for a moving object is defined in the second independent claim 13.

Special or preferred embodiments of the system and the method are the subject of dependent claims.

### Brief Description of the Drawings

Other objects and aspects of the invention will become apparent from the following description of embodiments with reference to the accompanying drawings, in which:
Fig. 1 is a block diagram illustrating a conventional character radio paging network;
Fig. 2 is a block diagram illustrating a conventional character radio pager in FIG. 1;
FIG. 3 is a block diagram illustrating a multimedia terminal according to the first embodiment of the present invention;
FIG. 4 is a block diagram illustrating a system for providing multimedia information to subscribers according to the first embodiment of the present invention;
FIG. 5 is a flow chart illustrating the multimedia system to provide information for the subscribers according to the first embodiment of the present invention;
FIG. 6 is a flow chart illustrating the output of the information according to the output control scheduler in FIG. 5;
FIG..7 is a schematic block diagram illustrating a system for providing multimedia information according to the second embodiment of the present invention;
FIG. 8 is a block diagram illustrating the ICS in FIG. 7;
FIG. 9 is a block diagram illustrating the MMT according to the second embodiment of the present invention;
FIG. 10 is a block diagram illustrating the database according to the second embodiment of the present invention;
FIG. 11 is a flow chart illustrating the multimedia system to provide information to the subscribers according to the second embodiment of the present invention; and
FIG. 12 is a flow chart illustrating the output of the information according to the output control scheduler in FIG. 11.

### Best Mode for Carrying out the Invention

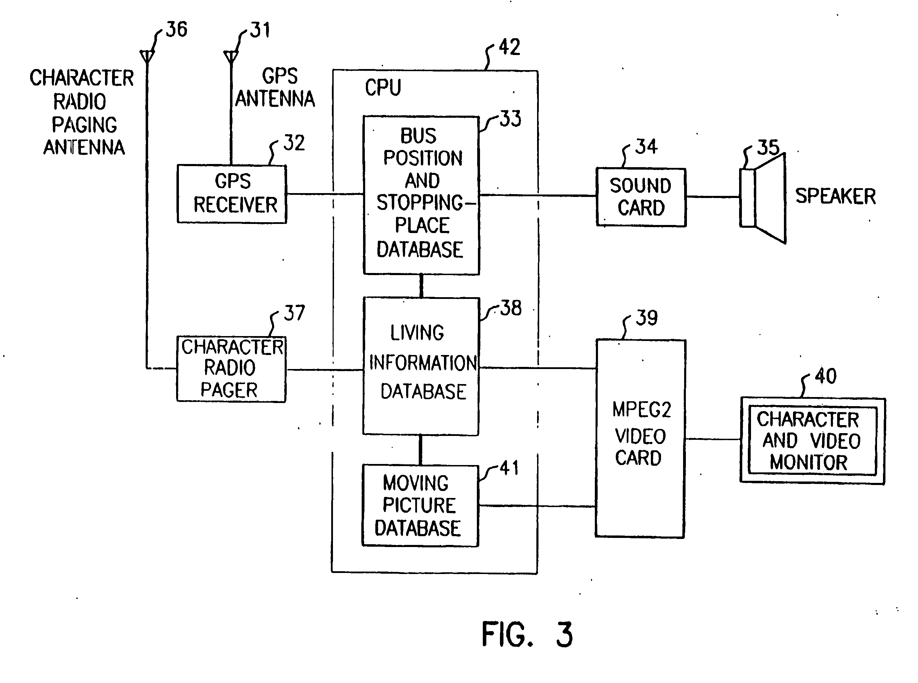

Hereinafter, the first embodiment of the present invention will be described in detail referring to FIGS. 3 to 6.

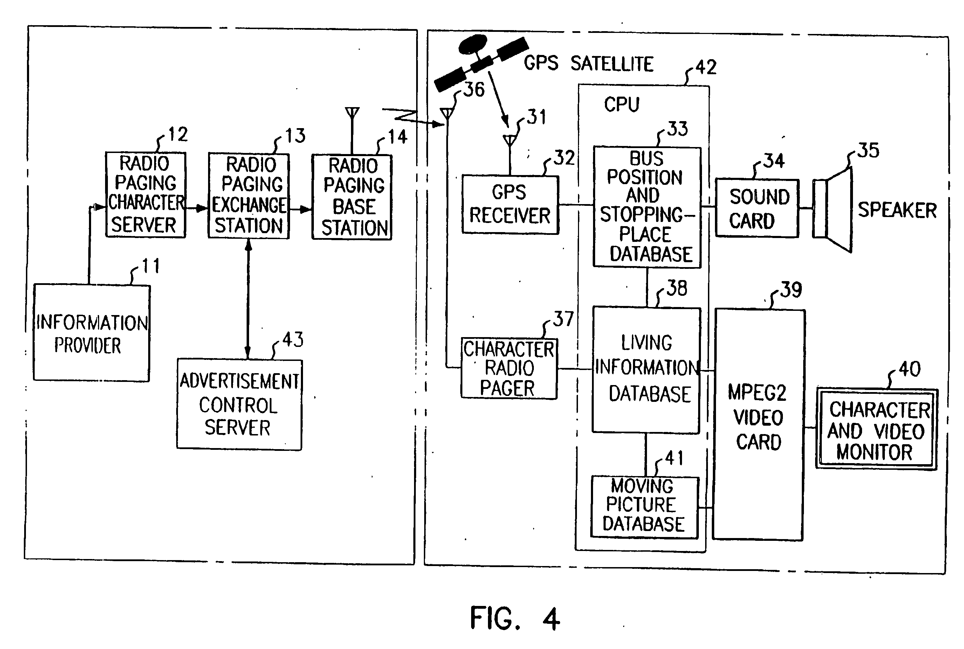

First, FIG. 3 is a block diagram illustrating a multimedia terminal according to the first embodiment of the present invention and FIG. 4 is a block diagram illustrating a system for providing multimedia information to subscribers according to the first embodiment of the present invention.

In FIGS. 3 and 4, the reference numeral 31 denotes a GPS (Global Positioning System) antenna, 32 a GPS receiver, 33 a bus position and stopping-place database relative to the bus position by its routes and to the stopping-place information of the bus, 34 a sound card, 35 a speaker, 36 a radio paging antenna, 37 a character radio pager for receiving character-based information, 38 a living information database, 39 an MPEG2 (Moving Pictures Expert Group 2) video card, 40 a monitor, 41 a moving picture database such as advertisements, 42 a CPU and 43 an advertisement control server.

To notify passengers of the bus stop, the GPS receiver 32, with which a bus is loaded, receives GPS information from a GPS satellite through the GPS antenna 31 in a moving picture multimedia terminal (MMT) and then demodulates the received GPS information.

The CPU 42 receives the demodulated information from the GPS receiver 32. At this time, if the received information by the CPU 42 has position information (hereinafter, referred to as broadcast-required position information) corresponding to the position in which an announcement about the bus stop should be provided to the passengers, the CPU 42 retrieves the bus position and stopping-place database 33 according to a control program, and then the extracted announcement about the bus stop is outputted to the sound card 34 and the MPEG2 video card 39 when an offer of other information, which is being outputted, comes to an end.

The sound card 34 converts the output from the CPU 42 into voice signals and then provides the announcement to the passengers via the speaker 35.

The MPEG2 video card 39 converts the output from the CPU 42 into video signals so that it provides the position information in and around the bus stop for the passengers via the monitor 40.

The character radio pager 37 receives radio frequency (living information including a new flash and control signals) based on the characters through the radio paging antenna 36 and demodulates the received radio frequency.

On the other hand, the CPU 42 receives the living information and control signals from the radio pager 37. At this time, after the CPU 42 stores them in the living information database 38 including the character-based information and the moving picture database 41 according to the system control programs, in the case where there are not received a news flash and broadcast-required position information, the CPU 42 retrieves the living information database 38 and the moving picture database 41, and then outputs the living information and the moving picture information to the MPEG2 video card 39.

Furthermore, since the moving picture database 41 is in need of a large quantity of information, the moving picture information is not transmitted through the radio paging network. Accordingly, the CPU 42 stores the moving picture information in a multimedia system such that the CPU 42 remotely manages and controls which advertisements are broadcasted and how many advertisements are broadcasted via advertisement control server 43 coupled to the radio paging exchange station 13. In addition, the living information database 38 is made up of various data in connection with the living information.

The bus position and stopping-place database 33 is built up by previously and substantially examining the position coordinates of the bus routines and by correcting distance errors caused by topography such as an underground passage which makes the correct measurement of the position coordinates impossible.

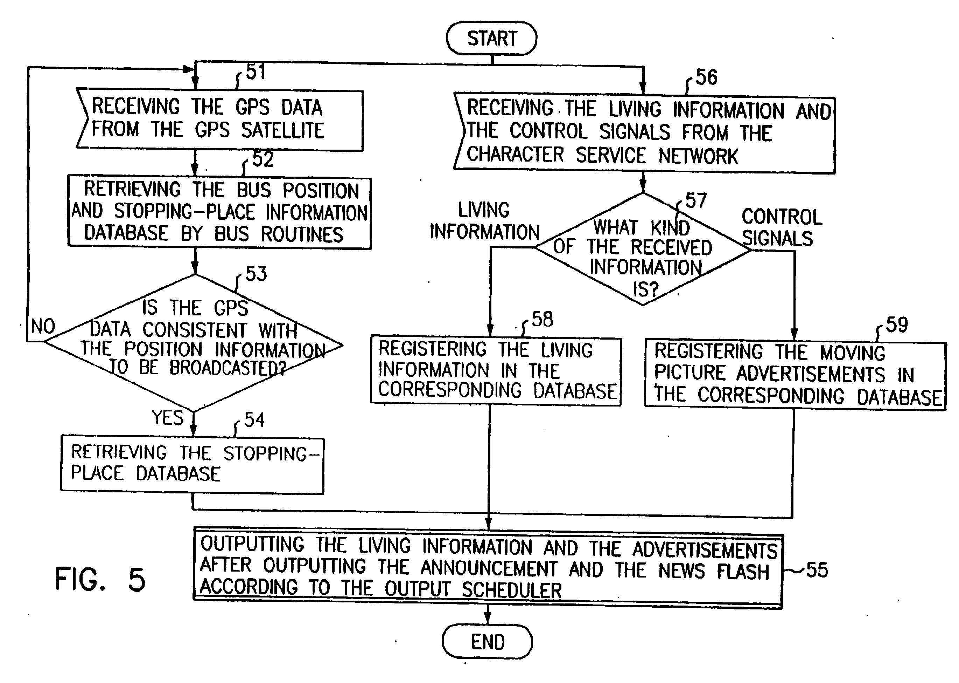

FIG. 5 is a flow chart illustrating the multimedia system to provide information for the subscribers according to the first embodiment of the present invention.

First, in the case where the GPS receiver 32 receives the GPS data from the GPS satellite at step 51, the CPU 42 retrieves the bus position and stopping-place database, which is already provided to the multimedia system of the present invention, at step 52 such that the CPU 42 determines whether the received GPS data from the GPS satellite is consistent with the position information to be broadcasted or not, at step 53.

If the received GPS data from the GPS satellite is not consistent with the position information to be broadcasted, the GPS receiver repeatedly carries out the step of receiving the GPS data from the GPS satellite. On the other hand, if the received GPS data is consistent with the position information to be broadcasted, the CPU retrieves the bus position and stopping-place database for the announcement of the bus stop, and then outputs the related information at step 54.

Next, at step 55, after outputting the bus stop information and the new flash under the control of the output scheduler, the living information and the moving picture information are outputted. That is, after the output of the living information and the moving picture information are delayed, for example, for 30 seconds until the living information and advertisements, which is being outputted, comes to an end, the announcement is promptly outputted in voice signals and the position information in and around the bus stop is simultaneously outputted to the passengers via monitor.

On the other hand, if the CPU 42 receives the living information and the control signals from a character service network providing the living information at step 56, the CPU 42 estimates the kind of the received information at step 57. The living information is registered in the living information database 38 at step 58 and also the control signals are registered in the moving picture database at step 59.

After outputting the announcement of bus stop and the news flash under the control of the output scheduler, the living information and the moving picture information are outputted at step 55. Similarly, in the case where there are not received the broadcast-required position information and a news flash, the living information database 38 and the moving picture database 41 are retrieved, and then the living information and the moving picture information are outputted to the MPEG2 video card 39.

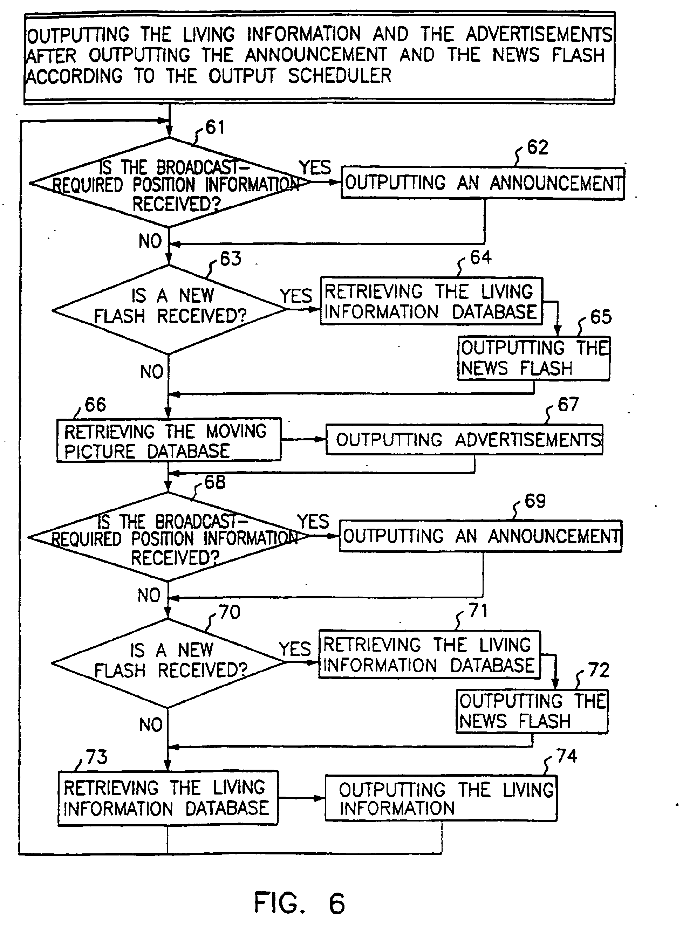

FIG. 6 is a flow chart illustrating the output of the information according to the output control scheduler in FIG. 5.

According to the present invention, the CPU processes the bus stop information and the news flash in preference to any other information such as the advertisements, weather conditions, stocks and the like.

First, the CPU ascertains whether the broadcast-required position information is received at step 61, and then outputs the announcement in voice and video signals at step 62 if the broadcast-required position information has been received.

In the case where the broadcast-required position information has not been received or after the broadcast-required position information is outputted, the CPU ascertains whether the news flash is received at step 63, and then retrieves the living information at step 64 if the news flash has been received. Considering that the passengers are uncomfortable, the voice information may not be provided.

At step 66, the CPU 42 retrieves the moving picture database in the case where the news flash has not been received or the new flash has been outputted, and then outputs the predetermined advertisements at step 67.

Next, the CPU 42 ascertains whether the bus stop information is received at step 68, and then outputs the information related to the bus stop in voice and video signals at step 69 if the broadcast-required position information has been received.

The CPU 42 ascertains whether the news flash has been received at step 70 in the case where the broadcast-required position information has not been received or after the announcement has been outputted. At this time, in the case where the news flash has been received, the CPU 42 retrieves the living information database at step 71 and then outputs the news flash to the monitor at step 72.

In the case where the news flash has not been received or after the news flash has been outputted, the CPU 42 retrieves the living information database at step 73 and then outputs to the monitor various kinds of information, such as news, weather conditions, stocks, sports and the like, at step 74. However, the phonetic sounds may not be given in consideration of safety driving and passengers discomfort. Continuously, the CPU 42 repeatedly performs the step of ascertaining whether the broadcast-required position information has been received.

As stated above, the first embodiment of the present invention is applicable to other public transports, such as a subway and a train provided the database of the position coordinates related to the position of the a stopping-place and the GPS receiver are modified, and the transports are equipped with them.

In other words, the train may be in need of the same elements as the bus provided that the database of the position coordinates is modified. In addition, the train may provide information only about its periphery corresponding to its route. Further, the information providing system used in the bus can be applicable to the subway, however the subway station must have a pulse generating equipment, and the train must have a pulse receiver because the GPS wave is not propagated into the underground.

If the pulse receiver mounted on the train receives a pulse generated by the pulse generating equipment set up in the subway station, for example, an underground tunnel, the train provides an announcement about next station to passengers, of course, in the case where there is not provided information about the next station, the train may display various kinds of information, such as weather conditions, advertisements, sports, and the like.

In the case where the present invention is employed only in a fixed place, the present invention can output only video information without voice information with the removal of the corresponding GPS equipments and other equipments which are necessary to provide the announcement of a stopping-place, of course, it is also possible to provide the voice information when the video information has been providing to the passengers.

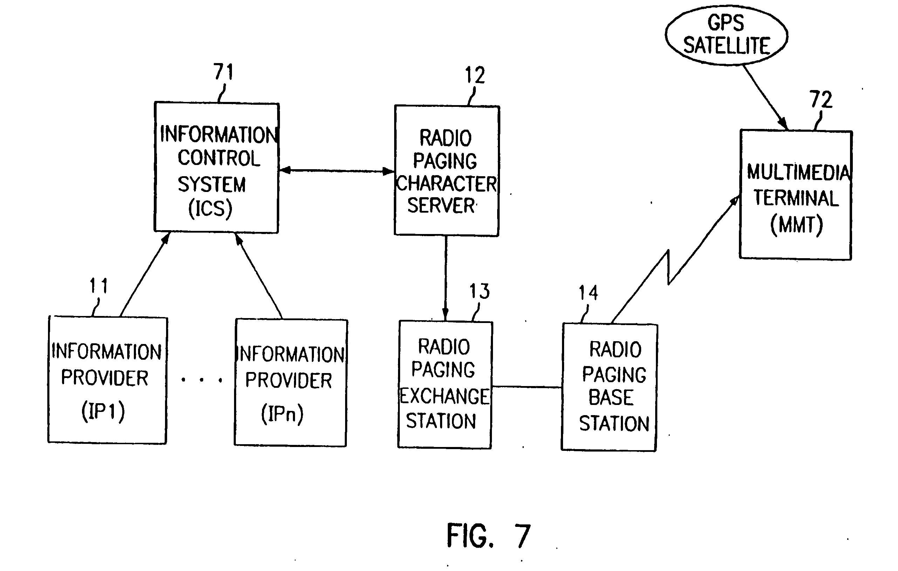

The second embodiment of the present invention will be described in detail referring to FIGS. 7 to 12.

FIG. 7 is a schematic block diagram illustrating a system for providing multimedia information according to the second embodiment of the present invention, in which the reference numeral 71 denotes as information control system (ICS), 72 a multimedia terminal (NMT).

First, after the ICS 71 receives the living information from the information providers 11 and processes the received living information, the ICS 71 transmits the living information and control information to the radio paging character server 12. The radio paging character server 12, which received the processed living information and the control information, classifies the living information by subscribers, and then transmits the information to the MMT 72 through the radio paging exchange station 13 and the radio paging base station 14.

On the other hand, the MMT 72 receives and stores the transmitted living information and control information, and also receives the information about the GPS position coordinates from the GPS satellite, thereby displaying various kinds of information according to the control program of the schedule system after comparing the GPS position information with the bus position and stopping-place database by bus routines.

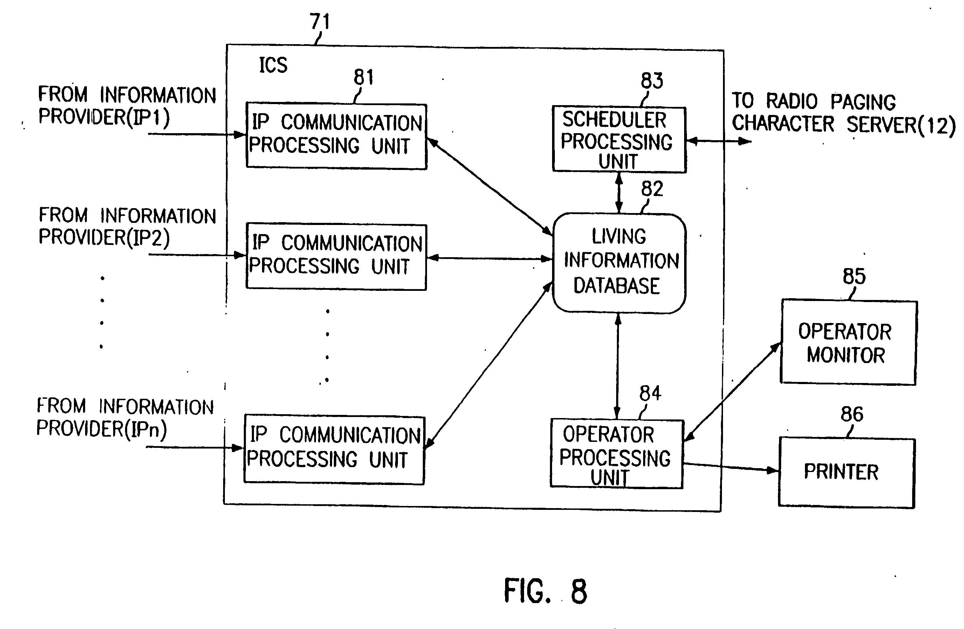

FIG. 8 is a block diagram illustrating the ICS in FIG. 7. In FIG. 8, the reference numeral 81 denotes an information provider(IP) communication processing unit, 82 a living information database, 83 a scheduler processing unit, 84 an operator processing unit, 85 an operator monitor and 86 a printer.

First, the IP communication processing unit 81 receives the living information from the information provider 11 and then stores the received living information in the living information database 82.

The operator processing unit 84 may control and drive all modules in the ICS 71 under the control of the operators, by outputting the various kinds of state information to the operators. That is, since the operators can know all states processing the internal modules in operation, it is possible to control all the internal modules. Also, The operator processing unit 84 provides the operator with processing pictures, in which the operator can determine methods used in transmitting data, and can determine a period of store of the living information in the database. Furthermore, the operator processing unit 843 can make inquiries about the particulars of the transmission/receiving of the living information by items, days and months, also make inquiries about the various particulars of the moving and still picture information by the established multimedia terminals and various kinds of information. In the text information, the operator controls the size, kind, style and color of font and their arrangement method and the operator processing unit 84 provides a GUI(Graphic User Interface) picture for indicating a background picture.

The scheduler processing part 83 first reads the number of pager for receiving the information according to its transmission region and transmission methods according to information items, and the their periods, and then stores them. The scheduler processing part 83 reads the living information and the moving and still picture control information by periodically accessing the living information database. At this time, after indicating the different transmission methods and then processing the data, the operator transmits the processed data to the radio paging character server 12.

The transmission method can be selected from the periodic transmission method to periodically transmit data at a fixed period, the immediate transmission method to immediately transmit data as soon as the data is received, the repeated transmission method to repeatedly transmit a specific item by the predetermined number of time, the batch transmission method to transmit a specific item group in a lump and the selective transmission method to selectively transmit data in response to the predetermined methods.

Since there is an information packet transmitted from the information control system 71 to the radio paging character server 12 and a response packet transmitted from the radio paging character sever 12 to the information control system 71, it is possible to correct the information packet in which there is an error. The data of the information packet includes the name of information item, an information item code, an information provider, a transmission method, a background picture and contents of the information. Also, the transmission may be determined by information item codes, and more particularly by established media and regions.

As stated above, the processed information in the operator processing part 84 is stored in the living information database 82 and then transmitted to the MMT 72 through the radio paging network 12, 13 and 14 in response to the scheduler processing part 83.

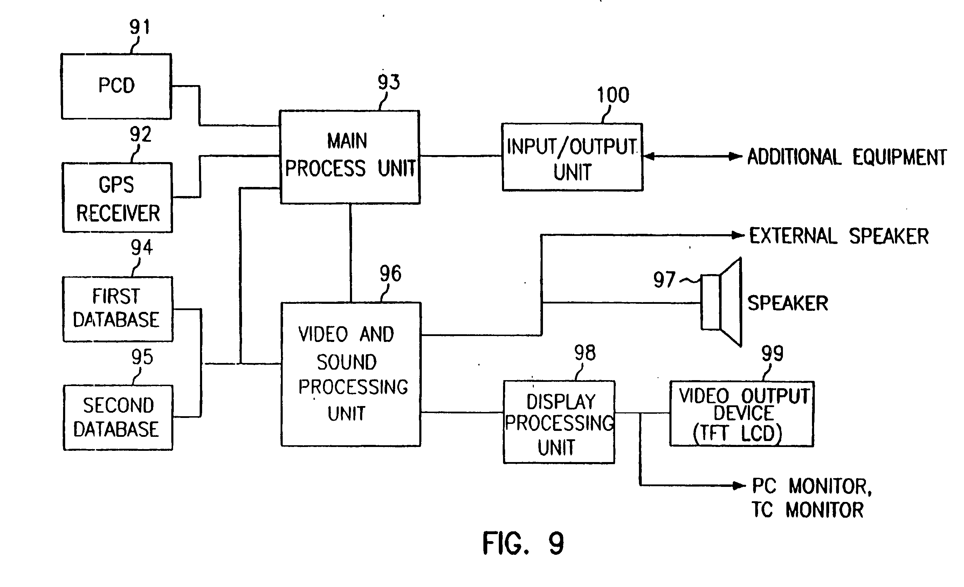

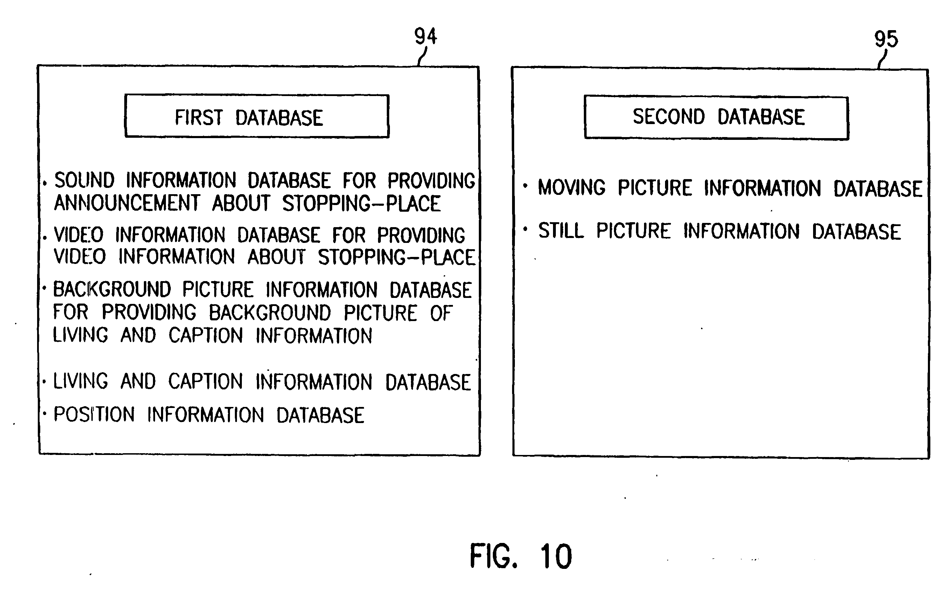

FIG. 9 is a block diagram illustrating the MMT according to the second embodiment of the present invention and FIG. 10 is a block diagram illustrating the database according to the second embodiment of the present invention. In FIGS. 9 and 10, the reference numeral 91 denotes a PCD(Paging Network Connection Device), 92 a GPS receiver, 93 a main processor unit (MPU), 94 a first database, 95 a second database, 96 a video and sound processing unit, 97 a speaker, 98 a display processing unit 99, a video output device (TFT LCD) and 100 an input/output unit.

The PCD 91 of the MMT 72 receives from the information control system 71 the living information, the caption information, the moving/still picture control information and the like, and processes them, and then transmits effective information to the MPU 93. On the other hand, the GPS receiver 92 receives and demodulates the GPS information from the GPS satellite, and then transmits the position information to the MPU 93.

The MPU 93 controls the entire operation of the MMT 72 at real time operation and carries out all operations of job scheduling. If there exist the position information received from the GPS receiver 92 in the established position coordinate information database about a stopping-place, the MPU 93 retrieves the first database 94, for example, the video and voice information database for the stopping-place information corresponding to the received position coordinate, and then, when the output of other information comes to an end, immediately outputs the corresponding announcement to the display processing part 98 in order that the passengers can show the corresponding information through the video output device 99 and/or the speaker 97. At this time, it is possible to minimize errors caused by obstacles such as buildings in the downtown area, by using an adaptive algorithm.

In addition, the MPU 93 stores the living and caption information received from the PCD 91 in the living and caption information database of the first database 94, and stores the moving and still picture control information in the moving picture information database and the still picture information database of the second database, respectively. In the case where there is no broadcast-required position information received from the GPS receiver in the established position information database about the bus routine, the MPU 93 respectively extracts the various kinds of living information and the previously stored picture information from the first database, which includes the living and caption information database and the background picture database for the living and caption information, and the second database, which includes the moving and still picture information database, in order of the job scheduling of the MPU 93. Next, the MPU 93 processes the information extracted from the video and sound processing unit 96 and then outputs the extracted information to the video output device (TFT LCD) 99. Before the video information is outputted to the video output device 99, the display processing unit 98 processes the video information to be matched with the output device. Accordingly, the present invention can use the TV monitor and VGA PC monitor as well as TFT LCD.

On the other hand, after receiving the video and voice information and processing it, the video and sound processing unit 96 outputs the voice information to the speaker 97 or an external speaker and outputs the video information to the display processing unit 98.

The living and caption information in the data received from the PCD 91 are respectively stored in the living and caption information database of the first database 94. Also, as shown in FIG. 10, the first database 94 includes the voice information database for providing an announcement about stopping-places, the video information database for providing the video information of stopping-places and their outskirts, the background picture information database for providing the background pictures of the living and caption information, the living and caption information database for providing the passengers with useful information, and the position information database for recognizing the position of the bus routine on the coordinate system. The second database 95 includes the moving and still picture information database for providing the video information such as advertisements.

The read/write/clear operations are allowed to be executed in the first and second database through the MPU 93 and the input/output unit 100. The update of database is carried out by two methods, one of which is to update the database through the input data from the input/output unit 100 under the control of the MPU 93, and the other of which is to update the database through the replacement of the database.

On the other hand, since the moving and still picture information database has a very large amount of data, the data is not transmitted through the radio paging network but directly stored in the multimedia terminal. The management of the database is remote controlled by the radio paging character server 12 based on the character service network of the living information. That is, the operator manages which advertisements are to be broadcasted and how many times advertisement are to be broadcasted through the radio paging character server 12. Further, the database associated with the living information may be established according to the different kinds of living information.

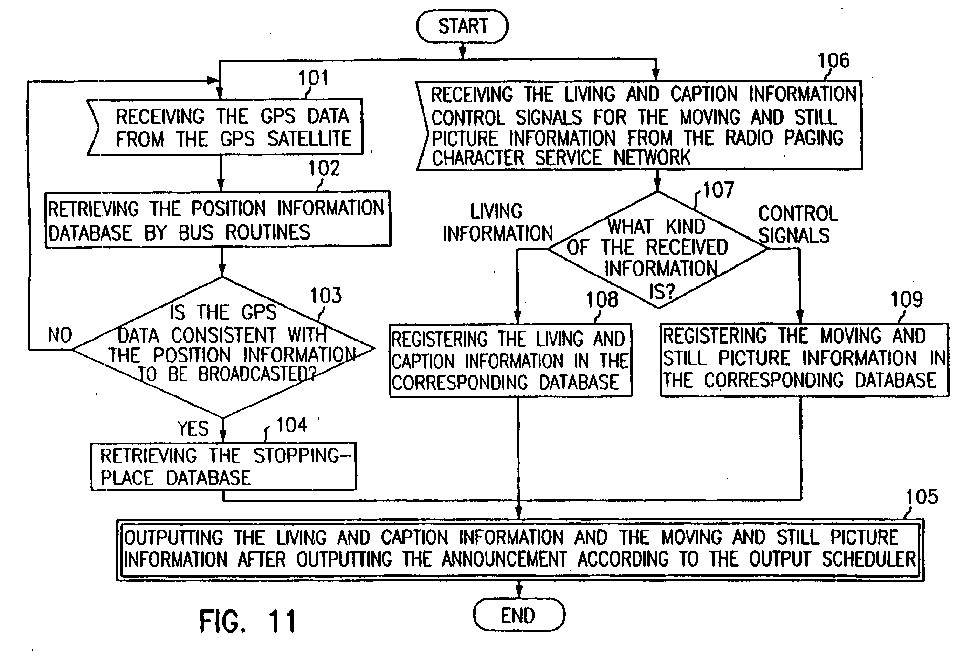

FIG. 11 is a flow chart illustrating the multimedia system to provide information to the subscribers according to the second embodiment of the present invention.

First, in the case where the GPS data is received from the GPS satellite at step 101, the MPU 93 retrieves the position information database by bus routines at step 102 such that the MPU 93 determines whether the received GPS information from the GPS satellite is consistent with position information to be broadcasted or not, at step 103.

If the received GPS information from the GPS satellite is not consistent with the position information to be broadcasted, the GPS receiver repeatedly carries out the step of receiving the GPS information from the GPS satellite. On the other hand, if the received GPS information from the GPS satellite is consistent with the position information to be broadcasted, the MPU 93 retrieves the stopping-place database and then extracts the related announcement at step 104.

Next, after outputting the announce of stopping-place under the control of the job scheduling of the MPU, the living information, the caption information, and the moving and still picture information are outputted at step 105. That is, after the output of the corresponding information are delayed, for example, for 30 seconds until the information, which is being outputted, comes to an end, the announcement of stopping-place is promptly outputted in voice signals and the picture information in and around the stopping-place is simultaneously outputted to the passengers via the monitor.

On the other hand, if the MPU 93 receives the character and caption information and the control signals for the picture information from a radio paging character service network providing the living information at step 106 , the MPU 93 estimates the kind of the received information at step 107. In the case of the living and caption information, this information is registered in the living and caption information database at step 108 and, in the case of the control signals, the control signals are registered in the moving and still picture database at step 109.

After outputting the announcement of the stopping-place under the control of the job scheduling of the MPU 93, the living and caption information and the moving and still picture information are outputted at step 105. That is, in the case where there is not received the broadcast-required position information, the living and caption information database and the moving and still picture database 41 are retrieved, and then the living information, the caption information and the moving and still picture information are outputted to the monitor.

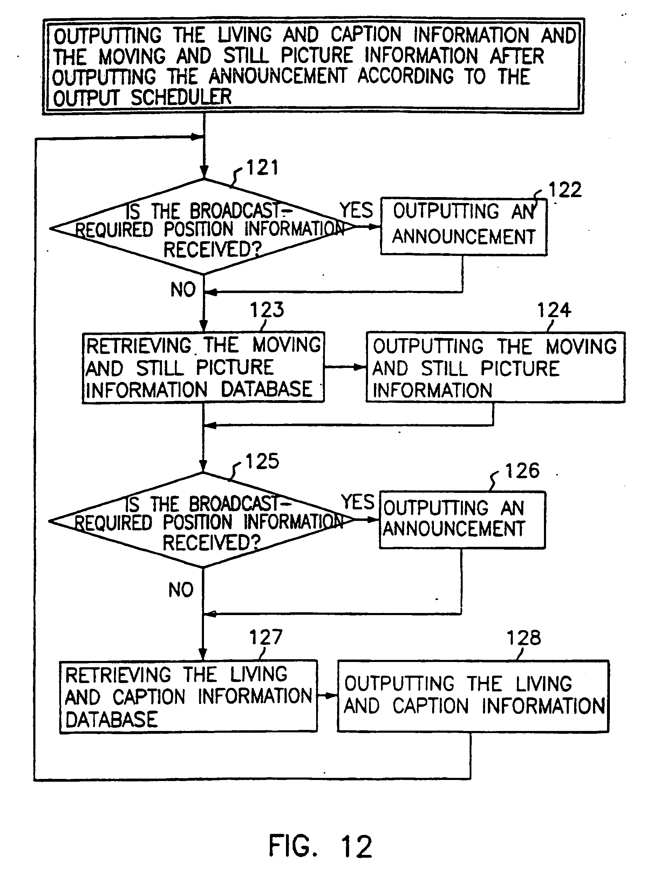

FIG. 12 is a flow chart illustrating the output of the information according to the output control scheduler in FIG. 11.

The MPU 93 processes the stopping-place information in preference to any other information such as the moving and still picture information, the living and caption information.

First, the MPU 93 ascertains whether the broadcast-required position information is received at step 121 and then outputs the announcement of the stopping-place in voice and video signals at step 122 if the broadcast-required position information is received.

In the case where the broadcast-required position information is not received or after the broadcast-required position information is outputted, the MPU 93 retrieves the moving and still picture information database at step 123 in response to the job scheduling, and then outputs the moving and still picture information to the monitor at step 124. Considering that the passengers are uncomfortable, the voice information may not be provided.

The MPU 93 ascertains again whether the broadcast-required position information of the stopping-place is received at step 125, and then outputs the announcement to the passengers in voice and/or video signals at step 126 if the broadcast-required position information is received.

In the case where the broadcast-required position information has not been received or after the broadcast-required position information has been outputted, the MPU 93 retrieves the living and caption information database at step 127, and then outputs to the monitor various kinds of information, such as new, weather conditions, stocks, sports and the like, at step 128. However, the phonetic sounds are not given in consideration of safety driving and passengers' discomfort. Continuously, the MPU 93 repeatedly performs the step of ascertaining whether the bus stop information has been received.

As stated above, the second embodiment of the present invention is applicable to other public transports such as a subway and a train provided that the database of the position information related to the position of the bus stop and the GPS receiver are modified and the public transports are equipped with them.

In other words, the train may be in need of the same elements as the bus provided the database of the position information is modified. In addition, the train may provide information only about its periphery corresponding to its route. Further, the information providing system used in the bus can be applicable to the subway, but the subway station must have a pulse generating equipment and also the train must have a pulse receiver because the GPS frequency is not propagated into the underground.

If the pulse receiver mounted on the train receives a pulse generated by the pulse generating equipment set up in the subway station, for example, an underground tunnel, the train provides information about next station to passengers, of course, in the case where there is no an announcement about next station, the train may display various kinds of information, such as weather conditions, advertisements, sports, and the like.

In the case where the present invention is employed only in a fixed place, the present invention can output only video information without voice information with the removal of the corresponding GPS equipments and other equipments necessary to provide the bus stop information, of course, it is also possible to provide the voice information when the video information has been provided to the passengers.

According to the present invention, as the above described, the automatic announcement service just in the bus about bus position and stopping-place can make the driver concentrate on safety-driving due to GPS satellite, while he cannot pay attention to driving carefully, with the announcement operated by his own hands. As a result of that, both passenger's safety and the traffic safety regulations are guaranteed, and a good qualified service for both passengers and traffic officers of a local autonomous entity is provided. Moreover, there are both useful information to passengers and operator's obtainable profits through other information such as advertisement.

## Claims

1. A system for providing character-based information for a moving object, the system including a receiving unit (23), a data processing unit (25), and an indicator unit (26), comprising:
a first receiving means (91) for receiving and demodulating control information and character-based information from a character radio paging network providing the character-based information;
a second receiving means (92) for receiving and demodulating position information indicating a present position of the moving object;
a first store means (94) for storing the character-based information received from the first receiving means (91);
a second store means (95) for storing the control information received from the first receiving means (91) and operator information directly inputted by an operator;
a third store means (94) for storing picture information to be used as a background picture when the character-based information is outputted;
a fourth store means (94) for storing broadcast-required position information according to the movement of the moving object;
a fifth store means (94) for storing a stopping-place announcement for the present moving position of the moving object;
a sixth store means (94) for storing picture information to be used as a background picture when the announcement is outputted;
a control means (93) for extracting useful information from the first (94), second (95) and third (94) store means or extracting an announcement stored in the fifth store means (94) under the control of an output control schedule which processes the stopping-place information in preference to any other information in the case where the position information received from the second receiving means (92) corresponds to the position information stored in the fourth store means (94);
an output means (99) for outputting the extracted information from the first (94), second (95), third (94), fifth (94) and sixth (94) store means; and
a remote control means (71) for transmitting control information to the receiving means (91) through the character radio paging network in order to remotely manage the information stored in the second store means (95).

2. The system in accordance with claim 1, wherein the output means comprises a picture information output means (99) for outputting character and picture information from the first (94), second (95), third (94), fifth (94) and sixth (94) store means.

3. The system in accordance with claim 2, wherein the output means further comprises a voice output means (97) for outputting voice information from the second store means (95).

4. The system in accordance with claim 1, 2 or 3, wherein the second receiving means (92) comprises a GPS receiver for receiving and demodulating present position information from a GPS satellite.

5. The system in accordance with claim 1, 2 or 3, wherein the second receiving means (92) comprises a pulse receiver for measuring distance, wherein the pulse receiver receives a distance measuring pulse from a pulse generator and demodulates present position information.

6. The system in accordance with any one of the claims 1 to 5, wherein the output means comprises:
a voice information output means (97) for providing present moving position of the moving object, by processing voice information stored in the fifth store means (94).

7. The system in accordance with claim 6, wherein, in the information stored in the second store means (95), the information directly inputted by the operator comprises moving picture advertisement information.

8. The system in accordance with any one of the claims 1 to 7, wherein the moving object is one of public transports.

9. The system in accordance with any one of the claims 1 to 8, further comprising:
a third receiving means (81) for receiving character-based information from an external provider;
a seventh store means (82) for storing the character-based information received from the third receiving means (81) and control information from an external operator; and
a transmitting means for extracting the character-based and control information stored in the seventh store means (82) and outputting the character-based and control information stored in the seventh store means (82) to the first receiving means (91) in response to a second scheduler (83).

10. The system of claim 9, further comprising:
a picture information processing means (96) for processing the picture information in the store means for storing the character-based information (94), the means for storing the background picture information (94) and the means for storing the control information received from the first receiving means (91) and operator information directly inputted by an operator;
a display processing means (98) for determining a display type of the picture information received from the picture information processing means (96); and
a picture output means (99) for outputting the picture information received from the display processing means (98).

11. The system in accordance with claim 10, wherein the output means comprises:
a voice information processing means (96) for processing the picture information in said store means for storing the control information (95); and
a voice information processing means (96) for processing the voice information received from the voice information processing means.

12. The system in accordance with claim 10 or 11, wherein, in the information stored in the second store means (95), the information directly inputted by the operator comprises moving and still picture information.

13. A method for providing useful information including character-based information for a moving object, comprising the steps of:
storing operator information directly inputted by an operator and background picture information, position information associated with a movement of a moving object, and stopping-place announcement information for broadcasting a present moving position of the moving object, in a database;
transmitting control information for the operator to manage the information stored in the database and character-based information through a character radio paging network;
receiving control information and character-based information through the character radio paging network and storing the received control and character-based information in the database;
receiving and demodulating present position information of the moving object; and
extracting and outputting the operator information directly inputted by the operator or the character-based information and the background picture information, or extracting and outputting the stopping-place announcement corresponding to the present position of the moving object in the case where the present position of the moving object corresponds to the moving object's position information stored in the database;
the step of extracting and outputting the operator information or the announcement comprising.
a first step of determining whether the present position information of the moving object corresponds to the moving object's position information stored in the database;
if corresponding, a second step of extracting the stopping-place announcement corresponding to the present position of the moving object from the database, and outputting the announcement after an offer of other information, which is being outputted, comes to an end;
if not corresponding, a third step of repeatedly performing the step of receiving, storing the control information, and character-based information and receiving and demodulating present position of the moving object;
a fourth step of extracting from the database the character-based information or the operator information directly inputted by the operator, and outputting the extracted character-based or operator information; and
wherein the stopping place information is scheduled to be output in preference to any other information.

14. The method in accordance with claim 13, wherein the fourth step is performed in response to the control information.

15. The method in accordance with claim 13 or 14, wherein the fourth step comprises:
a fifth step of extracting from the database the character-based information, which takes priority of output, and outputting the extracted character-based information; and
a sixth step of extracting from the database the operator information directly inputted by the operator or the character-based information which takes no priority of output, and outputting the extracted character-based or operator information.

16. The method in accordance with any one of claims 13 to 15, wherein the step of storing the received control and character-based information in the database comprises;
a seventh step of determining the kind of received information; and
an eight step of storing the received information in the database according to the kind of received information.

17. The method in accordance with any one of the claims 13 to 16, wherein the present position of the moving object is received from a GPS (Global Positioning System) satellite.

18. The method in accordance with any one of the claims 13 to 17, wherein the operator information directly inputted by the operator comprises moving and still picture information.

19. The method in accordance with claim 18, wherein the moving and still picture information comprises advertisements.

20. The method in accordance with any one of the claims 13 to 16, wherein the step of receiving the present position of the moving object comprises the step of receiving a pulse from an external pulse generator and demodulating the present position of the moving object.

21. The method in accordance with claim 20, wherein the operator information directly inputted by the operator comprises moving and still picture information, in particular advertisements.

## Patentansprüche

1. System zur Bereitstellung von zeichenbasierten Informationen für ein sich bewegendes Objekt, wobei das System eine Empfangseinheit (23) eine Datenverarbeitungseinheit (25) und eine Anzeigeeinheit (26) umfasst, die folgendes aufweist:
- ein erstes Empfangsmittel (91) zum Empfangen und Demodulieren von Steuerinformationen und zeichenbasierten Informationen von einem alphanumerischen Funkrufnetz, das zeichenbasierte Informationen liefert;
- ein zweites Empfangsmittel (92) zum Empfangen und Demodulieren von Positionsinformationen, die eine aktuelle Position eines sich bewegenden Objektes angeben;
- ein erstes Speichermittel (94) zum Speichern von zeichenbasierten Informationen, die von dem ersten Empfangsmittel (91) empfangen werden;
- ein zweites Speichermittel (95) zum Speichern von Steuerinformationen, die von dem ersten Empfangsmittel (91) empfangen werden, und von Betreiberinformationen, die von einem Betreiber direkt eingegeben werden;
- ein drittes Speichermittel (94) zum Speichern von Bildinformationen, die bei der Ausgabe der zeichenbasierten Informationen als Hintergrundbild benutzt werden;
- ein viertes Speichermittel (94) zum Speichern von für den Funk benötigten Positionsinformationen entsprechend der Bewegung des sich bewegenden Objektes;
- ein fünftes Speichermittel (94) zum Speichern einer Haltestationsankündigung für die aktuelle Bewegungsposition des sich bewegenden Objektes;
- ein sechstes Speichermittel (94) zum Speichern von Bildinformationen, die bei der Ausgabe der Ankündigung als Hintergrundbild benutzt werden;
- ein Steuermittel (93) zum Auslesen nützlicher Information aus einem ersten (94), zweiten (95) und dritten (94) Speichermittel oder zum Auslesen einer in einem fünften Speichermittel (94) gespeicherten Ankündigung durch Steuerung mittels eines Zeitsteuerungsprogramms für die Ausgabe, falls die vom zweiten Empfangsmittel (92) empfangene Positionsinformation mit der Positionsinformation übereinstimmt, die in der vierten Speichervorrichtung (64) gespeichert ist, welche die Haltestationsinformationen gegenüber allen anderen Informationen vorrangig verarbeitet;
- ein Ausgabemittel (99) zur Ausgabe der ausgelesenen Informationen aus dem ersten (94), zweiten (95), dritten (94), fünften (94) und sechsten (94) Speichermittel und
- ein Fernsteuerungsmittel (71) zur Übertragung von Steuerinformationen zum Empfangsmittel (91) über ein alphanumerisches Funkrufnetz zur Fernverwaltung von in dem zweiten Speichermittel (95) gespeicherten Informationen.

2. System nach Anspruch 1, bei dem das Ausgabemittel ein Ausgabemittel für Bildinformationen (99) zur Ausgabe von Zeichen- und Bildinformationen aus dem ersten (94), zweiten (95), dritten (94), fünften (94) und sechsten (94) Speichermittel aufweist.

3. System nach Anspruch 2, bei dem das Ausgabemittel ein Ausgabemittel für Sprachinformationen (97) zur Ausgabe von Sprachinformationen aus dem zweiten (95) Speichermittel aufweist.

4. System nach Anspruch 1, 2 oder 3, bei dem das zweite Empfangsmittel (92) einen GPS-Empfänger zum Empfangen und Demodulieren der aktuellen Positionsinformation von einem GPS-Satelliten aufweist.

5. System nach Anspruch 1, 2 oder 3, bei dem das zweite Empfangsmittel (92) einen Taktempfänger zur Entfernungsmessung aufweist, wobei der Taktempfänger einen Entfernungsmesstakt von einem Taktgeber empfängt und die aktuelle Positionsinformation demoduliert.

6. System nach einem der Ansprüche 1 bis 5, wobei das Ausgabemittel folgendes aufweist:
- ein Ausgabemittel (97) für Sprachinformationen zur Ausgabe von Sprachinformationen zur Bereitstellung der aktuellen Bewegungsposition des sich bewegenden Objektes durch Verarbeitung der in dem fünften Speichermittel (94) gespeicherten Sprachinformationen.

7. System nach Anspruch 6, bei dem in den Informationen, die im zweiten Speichermittel (95) gespeichert sind, die vom Betreiber direkt eingegebenen Informationen bewegte Werbebildinformationen enthalten.

8. System nach einem der Ansprüche 1 bis 7, bei dem das sich bewegende Objekt ein öffentliches Verkehrsmittel ist.

9. System nach einem der Ansprüche 1 bis 8, das weiterhin folgendes aufweist:
- ein drittes Empfangsmittel (81) zum Empfangen zeichenbasierter Informationen von einem externen Betreiber;
- ein siebtes Speichermittel (82) zum Speichern der von einem dritten Empfangsmittel (81) empfangenen zeichenbasierten Informationen sowie von Steuerinformationen von einem externen Betreiber und
- ein Übertragungsmittel zum Auslesen der in einem siebten Speichermittel (82) gespeicherten zeichenbasierten Informationen und Steuerinformationen sowie zur Ausgabe der in einem siebten Speichermittel (82) gespeicherten zeichenbasierten Informationen und Steuerinformationen an ein erstes Empfangsmittel (91) in Antwort auf ein zweites Zeitsteuerungsprogramm (82).

10. System nach Anspruch 9, das weiterhin folgendes aufweist:
- ein Verarbeitungsmittel für Bildinformationen (96) zur Verarbeitung der Bildinformationen in dem Speichermittel zum Speichern der zeichenbasierten Informationen (94), das Mittel zum Speichern der Hintergrundbildinformationen (94) und das Mittel zum Speichern der vom ersten Empfangsmittel (91) empfangenen Steuerinformationen sowie der von einem Betreiber direkt eingegebenen Betreiberinformationen;
- ein Bildschirmverarbeitungsmittel (98) zur Bestimmung einer Anzeigeart der vom Verarbeitungsmittel für Bildinformationen (96) empfangenen Bildinformationen und
- ein Bildausgabemittel (99) zur Ausgabe der vom Bildschirmverarbeitungsmittel (98) empfangenen Bildinformationen.

11. System nach Anspruch 10, bei dem das Ausgabemittel folgendes aufweist:
- ein Verarbeitungsmittel für Sprachinformationen (96) zur Verarbeitung der Bildinformationen in dem genannten Speichermittel zum Speichern der Steuerinformationen (95) und
- ein Verarbeitungsmittel für Sprachinformationen (96) zur Verarbeitung der vom Verarbeitungsmittel für Sprachinformationen empfangenen Sprachinformationen.

12. System nach Anspruch 10 bis 11, bei dem in den Informationen, die im zweiten Speichermittel (95) gespeichert sind, die vom Betreiber direkt eingegebenen Informationen bewegte und unbewegte Bildinformationen enthalten.

13. Verfahren zur Bereitstellung nützlicher Informationen, die zeichenbasierte Informationen für ein sich bewegenden Objektes enthalten, das aus folgenden Schritten besteht:
- Speichern von direkt von einem Betreiber eingegebenen Betreiberinformationen und von Hintergrundbildinformationen, von Positionsinformationen, welche die Bewegung des sich bewegenden Objektes betreffen und von Informationen der Haltestationsankündigung zum Senden einer aktuellen Bewegungsposition des sich bewegenden Objektes in einer Datenbank;
- Übertragen von Steuerinformationen für den Betreiber zur Verwaltung der in der Datenbank gespeicherten Informationen und von zeichenbasierten Informationen über ein alphanumerisches Funkrufnetz;
- Empfangen von Steuerinformationen und von zeichenbasierten Informationen über ein alphanumerisches Funkrufnetz sowie Speichern der empfangenen Steuerinformationen und zeichenbasierten Informationen in der Datenbank;
- Empfangen und Demodulieren der aktuellen Positionsinformationen des sich bewegenden Objektes und
- Auslesen und Ausgeben der vom Betreiber direkt eingegebenen Betreiberinformationen oder der zeichenbasierten Informationen und Hintergrundbildinformationen oder Auslesen und Ausgeben der Informationen der Haltestationsankündigung, die der aktuellen Position des sich bewegenden Objektes entspricht, falls die aktuelle Position des sich bewegenden Objektes mit der in der Datenbank gespeicherten Positionsinformation des sich bewegenden Objektes übereinstimmt.
- dem Schritt zum Auslesen und Ausgeben der Betreiberinformationen oder der Ankündigung, der folgendes umfasst:
- einen ersten Schritt, um festzustellen, ob die aktuelle Positionsinformation des sich bewegenden Objektes mit der in der Datenbank gespeicherten Positionsinformation des sich bewegenden Objektes übereinstimmt;
- bei Übereinstimmung einen zweiten Schritt zum Auslesen der Information der Haltestationsankündigung aus der Datenbank, die der aktuellen Position des sich bewegenden Objektes entspricht und zur Ausgabe der Ankündigung, nachdem die Ausgabe eines Angebotes anderer Informationen abgeschlossen wurde;
- bei fehlender Übereinstimmung einen dritten Schritt zur wiederholten Ausführung des Schrittes zum Empfangen und Speichern der Steuerinformationen und zeichenbasierten Information sowie zum Empfangen und Demodulieren der aktuellen Position des sich bewegenden Objektes;
- einen vierten Schritt zum Auslesen der zeichenbasierten Informationen oder der vom Betreiber direkt eingegebenen Betreiberinformationen aus der Datenbank und zum Ausgeben der ausgelesenen zeichenbasierten Informationen oder Betreiberinformationen, wobei die Haltestationsinformation zeitlich so festgelegt wird, dass die gegenüber allen anderen Informationen vorrangig ausgegeben wird.

14. Verfahren nach Anspruch 13, bei dem der vierte Schritt in Antwort auf die Steuerinformation ausgeführt wird.

15. Verfahren nach Anspruch 13 oder 14, bei dem der vierte Schritt folgendes umfasst:
- einen fünften Schritt zum Auslesen der zeichenbasierten Informationen aus der Datenbank, die vorrangig ausgegeben werden, sowie zum Ausgeben der ausgelesenen zeichenbasierten Informationen und
- einen sechsten Schritt zum Auslesen der vom Betreiber direkt eingegebenen Betreiberinformationen oder der zeichenbasierten Informationen aus der Datenbank, die nicht vorrangig ausgegeben werden, sowie zum Ausgeben der ausgelesenen zeichenbasierten Informationen oder Betreiberinformationen.

16. Verfahren nach einem der Ansprüche 13 bis 15, bei dem der Schritt zum Speichern der empfangenen Steuerinformationen und zeichenbasierten Informationen in der Datenbank folgendes umfasst:
- einen siebten Schritt zur Bestimmung der Art der empfangenen Informationen und
- einen achten Schritt zum Speichern der empfangenen Informationen in der Datenbank entsprechend der Art der empfangenen Informationen.

17. Verfahren nach einem der Ansprüche 13 bis 16, bei dem die aktuelle Position des sich bewegenden Objektes von einem GPS-Satelliten (Global Positioning System) empfangen wird.

18. Verfahren nach einem der Ansprüche 13 bis 17, bei dem die vom Betreiber direkt eingegebenen Betreiberinformationen bewegte und unbewegte Bildinformationen enthalten.

19. Verfahren nach Anspruch 18, bei dem die bewegten und unbewegten Bildinformationen Werbung enthalten.

20. Verfahren nach einem der Ansprüche 13 bis 16, bei dem der Schritt zum Empfangen der aktuellen Position des sich bewegenden Objektes den Schritt zum Empfangen eines Taktes von einem externen Taktgeber sowie das Demodulieren der aktuellen Position des sich bewegenden Objektes umfasst.

21. Verfahren nach Anspruch 20, bei dem die vom Betreiber direkt eingegebenen Betreiberinformationen bewegte und unbewegte Bildinformationen und insbesondere Werbung enthalten.

## Revendications

1. Système pour obtenir des informations en mode caractère pour un objet mobile, le système incluant une unité de réception (23), une unité de traitement de données (25) et une unité indicatrice (26), comprenant :
des premiers moyens de réception (91) pour recevoir et démoduler des informations de commande et des informations en mode caractère provenant d'un réseau de radiomessagerie en mode texte fournissant l'information en mode caractère;
des seconds moyens de réception (92) pour recevoir et démoduler l'information de position indiquant la position actuelle de l'objet mobile;
des premiers moyens de stockage (94) pour le stockage des informations en mode caractère reçues des premiers moyens de réception (91);
des seconds moyens de stockage (95) pour le stockage des informations de commande reçues des premier moyens de réception (91) et des informations d'opérateur directement saisies par un opérateur;
des troisièmes moyens de stockage (95) pour le stockage des informations d'image à utiliser en tant qu'image d'arrière-plan lors de l'édition de l'information en mode caractère;
des quatrièmes moyens de stockage (94) pour le stockage des informations de radiodiffusion selon le déplacement de l'objet mobile;
des cinquièmes moyens de stockage (94) pour le stockage une annonce d'emplacement d'arrêt pour la position actuelle de déplacement de l'objet mobile;
des sixièmes moyens de stockage (94) pour le stockage d'information d'image à utiliser en tant qu'image d'arrière-plan quand l'annonce est émise;
des moyens de commande (93) pour l'extraction d'une information utile provenant des premiers (94), seconds (95) et troisièmes (94) moyens de stockage ou pour l'extraction d'une annonce stockée dans les cinquièmes moyens de stockage (94) sous le contrôle d'un ordonnanceur de contrôle sur les sorties qui traite l'information d'emplacement d'arrêt de préférence à toute autre information dans le cas où l'information de position reçue des seconds moyens de stockage (92) correspond à la position d'information stockée dans les quatrième moyens de stockage (94);
des moyens de sortie (99) pour émettre l'information extraite des premiers (94), seconds (95), troisièmes (94), cinquièmes (94) et sixièmes (94) moyens de stockage et
des moyens de commande à distance (71) pour transmettre l'information de commande aux moyens de réception (91) par le réseau de radiomessagerie en mode caractère afin de gérer à distance les informations stockées dans les seconds moyens de stockage (95).

2. Système selon la revendication 1, dans lequel les moyens de sortie comprennent des moyens de sortie d'information d'image (99) pour émettre l'information en mode caractère et imagée depuis les premiers (94), seconds (95), troisièmes (94), cinquièmes (94) et sixièmes (94) moyens de stockage.

3. Système selon la revendication 2, dans lequel les moyens de sortie comprennent un moyen de sortie vocale (97) pour émettre l'information vocale provenant des seconds moyens de stockage (95).

4. Système selon la revendication 1, 2 ou 3 dans lequel les seconds moyens de réception (92) comprennent un récepteur GPS pour recevoir et démoduler l'information de position actuelle depuis un satellite GPS.

5. Système selon la revendication 1, 2 ou 3 dans lequel les seconds moyens de réception (92) comprennent un récepteur à impulsions pour la mesure de la distance, dans lequel le récepteur à impulsion reçoit une impulsion de mesure de distance depuis un générateur d'impulsions et démodule l'information de position actuelle.

6. Système selon l'une des revendications 1 à 5, dans lequel les moyens de sortie comprennent :
des moyens de sortie d'information vocale (97) pour fournir la position actuelle de déplacement de l'objet mobile, en traitant l'information vocale stockée dans les cinquièmes moyens de stockage (94).

7. Système selon la revendication 6, dans lequel, dans l'information stockée dans les seconds moyens de stockage (95), l'information directement entrée par l'opérateur comprend l'information publicitaire d'image mobile.

8. Système selon l'une quelconques des revendications 1 à 7, dans lequel l'objet mobile est un transport publique.

9. Système selon l'une quelconque des revendications 1 à 8, comprenant en outre :
des troisièmes moyens de réception (81) pour recevoir des informations en mode caractère depuis un fournisseur externe ;
des septièmes moyens de stockage (82) pour le stockage de l'information en mode caractère reçue des troisièmes moyens de réception (81) et de l'information de commande provenant d'un opérateur externe; et
des moyens de transmission pour extraire l'information en mode caractère et de commande dans les septièmes moyens de stockage (82) et pour envoyer l'information en mode caractère et de commande stockée dans les septièmes moyens de stockage (82) aux premiers moyens de réception (91) en réponse à un second ordonnanceur (83).

10. Système de la revendication 9, comprenant en outre :
les moyens de traitement de l'information image (96) pour le traitement de l'information d'image dans les moyens de stockage pour le stockage de l'information en mode caractère (94), les moyens de stockage de l'information d'image d'arrière plan (94) et les moyens pour le stockage de l'information de commande reçue des premiers moyens de stockage (91) et de l'information opérateur directement saisie par un opérateur ;
des moyens de traitement d'affichage (98) pour la détermination d'un type d'affichage de l'information image reçue des moyens de traitement d'information d'image (96); et
des moyens de sortie d'image (99) pour la sortie de l'information d'image reçue des moyens de traitement d'affichage (98).

11. Système selon la revendication 10, dans lequel les moyens de sortie comprennent :
des moyens de traitement de l'information vocale (96) pour le traitement de l'information d'image dans lesdits moyens de stockage pour le stockage de l'information de commande (95); et
des moyens de traitement d'information vocale (96) pour le traitement de l'information vocale reçue des moyens de traitement d'information vocale.

12. Système selon la revendication 10 ou 11, dans lequel dans l'information stockée dans les seconds moyens de stockage (95), l'information directement entrée par l'opérateur comprend des informations d'image mobiles et fixes.

13. Procédé pour l'obtention d'information utile incluant des informations en mode caractère pour un objet mobile, comprenant les étapes de :
stockage d'information d'opérateur directement saisie par un opérateur et des informations d'image d'arrière-plan, des informations de position associée à un mouvement d'un objet mobile et une annonce d'emplacement d'arrêt pour radiodiffuser une position actuelle de déplacement de l'objet mobile, dans une base de données ;
transmission de l'information de commande pour l'opérateur pour gérer l'information stockée dans la base de données et l'information en mode caractère par un réseau de radiomessagerie en mode caractère;
réception de l'information de commande et de l'information en mode caractère par le réseau de radiomessagerie et le stockage de l'information de commande et de l'information en mode caractère reçues dans la base de données;
réception et démodulation de l'information actuelle de position de l'objet mobile ; et
extraction et sortie de l'information d'opérateur directement entrée par l'opérateur ou de l'information en mode caractère et l'information d'image d'arrière plan ou extraction et sortie de l'annonce d'emplacement d'arrêt correspondant à la position actuelle de l'objet mobile dans le cas où la position actuelle de l'objet mobile correspond à l'information de position de l'objet mobile stockée dans la base de données;
l'étape d'extraction et de sortie de l'information d'opérateur ou de l'annonce comprenant
une première étape de détermination si l'information de position actuelle de l'objet mobile correspond à l'information de position de l'objet mobile stockée dans la base de données ;
en cas de correspondance, une seconde étape d'extraction de l'annonce de l'emplacement d'arrêt correspondant à la position actuelle de l'objet mobile depuis la base de données et la sortie de l'annonce après une offre d'une autre information qui est émise, se termine,
en cas de non correspondance, une troisième étape d'exécution répétitive de l'étape de réception, de stockage de l'information de commande et de l'information en mode caractère et la réception et de la démodulation de la position actuelle de l'objet mobile ;
une quatrième étape d'extraction depuis la base de données, de l'information en mode caractère ou de l'information d'opérateur directement entrée par l'opérateur et la sortie de l'information en mode caractère ou d'opérateur extraite et
dans lequel l'information d'emplacement d'arrêt est programmée pour être émise à la préférence de toute autre information.

14. Procédé selon la revendication 13, dans lequel la quatrième étape est exécutée en réponse à l'information de commande.

15. Procédé selon la revendication 13 ou 14 dans lequel la quatrième étape comprend :
une cinquième étape d'extraction depuis la base de données de l'information en mode caractère qui est prioritaire en sortie et la sortie de l'information en mode caractère extraite; et
une sixième étape d'extraction depuis la base de données de l'information d'opérateur directement entrée par l'opérateur ou de l'information en mode caractère qui ne prend pas de priorité de sortie et la sortie de l'information en mode caractère extraite ou de l'information d'opérateur.

16. Procédé selon l'une des revendications 13 à 15, dans lequel l'étape de stockage des informations reçues en mode caractère et de commande dans la base de données comprend :
une septième étape de détermination de la nature de l'information reçue; et
une huitième étape de stockage de l'information reçue dans la base de données selon la nature de l'information reçue.

17. Procédé selon l'une des revendications 13 à 16, dans lequel la position actuelle de l'objet mobile est reçue depuis un satellite GPS (Global Positioning System = système de positionnement global).

18. Procédé selon l'une des revendications 13 à 16, dans lequel l'information opérateur entrée directement par l'opérateur comprend l'information d'image fixe et mobile.

19. Procédé selon la revendication 18, dans lequel l'information d'image mobile et fixe comprend des annonces publicitaires.

20. Procédé selon l'une des revendications 13 à 16, dans lequel l'étape de réception de la position actuelle de l'objet mobile comprend l'étape de réception d'une impulsion provenant d'un générateur interne d'impulsions et de démodulation de la position actuelle de l'objet mobile.

21. Procédé selon la revendication 20, dans lequel l'information d'opérateur directement entrée par l'opérateur comprend l'information d'image fixe et mobile en particulier des annonces publicitaires.
